# EUROPÄISCHE PATENTANMELDUNG

(11) **EP 2 458 322 A1**
(43) Veröffentlichungstag der Anmeldung: **30.05.2012**
(21) Anmeldenummer: 10014976.4
(22) Anmeldetag: 25.11.2010
(51) Int. Cl.: G01B 11/16, F03D 11/00

(54) **Einrichtung und Verfahren zur Messung der Verformung eines Rotorblatts bei Belastung**

(71) Anmelder: Baumer Innotec AG, 8501 Frauenfeld (CH)
(72) Erfinder: Weigel, Michael, 88142 Wasserburg (DE); Tiedeke, Joachim, 8280 Kreuzlingen (CH)
(74) Vertreter: Strauss, Steffen

(57) **Zusammenfassung**

Die Erfindung betrifft eine Einrichtung zur Messung der Verformung eines Rotorblatts bei Belastung, bei welcher die Verdrehung einer Sender-/Empfängereinheit gemessen wird und der ansonsten durch die Verdrehung vorhandene Messfehler kompensiert wird.

## Beschreibung

### Gebiet der Erfindung

Die Erfindung bezieht sich auf eine Einrichtung sowie auf ein Verfahren zur Messung der Verformung eines Rotorblatts bei Belastung, insbesondere des Rotorblatts einer Windkraftanlage.

### Hintergrund der Erfindung

Rotorblätter, insbesondere Rotorblätter von Windkraftanlagen unterliegen hohen Belastungen. Diese werden in der Regel aus faserverstärkten Kunststoffen hergestellt und erfahren bei hohen Windgeschwindigkeiten einen hohen Durchbiegungsgrad. Hierdurch kann die Struktur des Rotorblatts geschädigt werden. Weiter kann es schlimmstenfalls dazu kommen, dass das gebogene Rotorblatt gegen einen Mast der Anlage stößt oder dass es sogar bricht.

Es ist daher bekannt, die Verformung, insbesondere die Biegung, eines Rotorblatts zu überwachen, um bei zu hoher Belastung durch Verstellung des Anstellwinkels des Rotorblatts die Belastung verringern zu können. Bei hohen Windgeschwindigkeiten muss die Anlage ganz abgeschaltet werden.

Eine derartige Einrichtung zur Messung der Verformung eines Rotorblatts zeigt beispielsweise die deutsche Patentschrift DE 10 2006 002 708 B4.

Dabei ist in der Nähe der Nabe des Rotorblatts eine Sender-/Empfängereinheit, bestehend aus einer Lichtquelle, vorzugsweise einer LED oder einer Laserdiode und einem ortsauflösenden, bildgebenden Sensor (beispielsweise CCD, CMOS) zusammen mit einem abbildenden System, angebracht.

Beabstandet von der Sender-/Empfängereinheit befindet sich ein Retroreflektor, insbesondere ein Tripel-Spiegel oder ein Array von Tripelspiegel, oder anderen retroreflektierenden Lösungen, über den das vom Sender ausgestrahlte Licht auf den ortsauflösenden Sensor reflektiert wird. Anhand der Position des Lichtpunktes auf dem ortsauflösenden Sensor kann die Verformung des Rotorblatts bestimmt werden.

Der Ort der Abbildung auf dem ortsauflösenden Sensor ist dabei proportional zu den Winkeln der Reflektoren zur optischen Achse des abbildenden Systems.

Mit einem solchen System kann auf relativ einfache Weise die Durchbiegung des Rotorblatts bestimmt werden.

Es hat sich allerdings gezeigt, dass, auch wenn die Sender-/Empfängereinheit nahe an der Nabe des Rotors angeordnet ist, sich der Bereich, in dem sich die Sender-/Empfängereinheit befindet, ebenfalls verformt. Typischerweise ist die Sender-/Empfängereinheit an einem Schott (der sog. Plattform) des Rotorblatts angeordnet, welches sich zwischen dem Flansch und dem eigentlichen Rotorblatt erstreckt. Ein derartiges Schott soll verhindern, dass größere Mengen von Wasser oder herumfliegende Teile in die Nabe des Rotors gelangen und so mechanische Schäden verursachen. In dem Bereich zwischen Nabe und Schott ist das Rotorblatt üblicherweise im Wesentlichen zylindrisch ausgebildet, besitzt also keine Blattstruktur, welche von der Luft angeströmt wird und so zur Rotation des Windrads beiträgt. Der Bereich zwischen Nabe und Schott ist daher in der Regel relativ steif.

Dennoch kann es bei, insbesondere am Schott angeordneten Sender-/Empfängereinheiten, zu einer leichten Verdrehung der Sender-/Empfängereinheit relativ zur Hauptachse des Rotorblatts kommen, derart, dass die Messung auf den Reflektor nicht mehr proportional zur Durchbiegung des Rotorblatts ist. Bei Verwendung eines Tripel-Spiegels reicht der vom Sender ausgehende Messbereich zwar in der Regel aus, um dennoch eine Messung vornehmen zu können.

Aufgrund der Winkelabweichung der Sender-/Empfängereinheit kommt es allerdings zu einem Messfehler, der die Genauigkeit der Messung verringert.

Im Detail kommt dieser Messfehler in der Regel dadurch zustande, dass es zu einer elliptischen Verformung des im Flanschbereich in der Regel kreiszylinderförmig, also im Querschnitt rund ausgebildeten Teil des Rotorblatts, kommt. Diese Verformung führt auch zu einer Verformung des Schotts, wodurch eine daran befestigte Sender-/Empfängereinheit die Ausrichtung ändert. Da das vorstehend beschriebene Messprinzip darauf beruht, eine Winkeländerung zu messen, wirkt sich die Verformung in Form eines Winkelfehlers unmittelbar als Messfehler aus.

### Aufgabe der Erfindung

Der Erfindung liegt demgegenüber die Aufgabe zugrunde, die genannten Nachteile des vorstehend beschriebenen Standes der Technik zumindest zu reduzieren.

Es ist insbesondere eine Aufgabe der Erfindung, den aufgrund einer Verdrehung einer Sender- und/oder Empfängereinheit auftretenden Messfehler zu kompensieren.

### Zusammenfassung der Erfindung

Die Aufgabe der Erfindung wird bereits durch eine Einrichtung zur Messung der Verformung eines Rotorblatts bei Belastung sowie durch ein Verfahren zur Messung der Verformung eines Rotorblatts nach einem der unabhängigen Ansprüche gelöst.

Bevorzugte Ausführungsform und Weiterbildungen der Erfindung sind den jeweiligen Unteransprüchen zu entnehmen.

Die Erfindung betrifft eine Einrichtung zur Messung der Verformung eines Rotorblatts bei Belastung, insbesondere des Rotorblatts einer Windkraftanlage.

Die Einrichtung umfasst zumindest einen am Rotorblatt angeordneten Sensor und zumindest einen Empfänger. Empfänger und Sensor können, wie es bei einer bevorzugten Ausführungsform der Erfindung vorgesehen ist, auch in einer Baugruppe integriert sein.

Sender und Empfänger sind vorzugsweise als bildgebendes System ausgebildet. Es ist aber denkbar, auch auf andere Messverfahren zurückzugreifen.

Bei einer Ausführungsform der Erfindung ist die Sender-/Empfängereinheit in der Nähe der Nabe am Rotorblatt angeordnet.

Von dem Sender und Empfänger beabstandet ist am Rotorblatt ein Reflektor angebracht, welcher das vom Sender ausgestrahlte Signal, insbesondere das Licht einer Leuchtdiode, zurückwirft.

Bei einer alternativen Ausführungsform der Erfindung ist statt einer Sender/Empfängereinheit und einem Reflektor der Sender beabstandet vom Empfänger am Rotorblatt angeordnet. Statt über beispielweise einen Spiegel zurück reflektiert zu werden, ist so das Lichtsignal direkt auf den Empfänger gerichtet. Diese Ausführungsform der Erfindung ist zwar in der Regel etwas aufwändiger, kann bei Störeinflüssen durch Verschmutzung, Beschlag etc. aber zuverlässiger sein.

Diese alternative Ausführungsform ist auch mit der vorstehend beschriebenen Verwendung eines Reflektors kombinierbar, so kann der Reflektor beispielsweise eine zusätzliche Lichtquelle umfassen.

Gemäß der Erfindung weist die Einrichtung Mittel zur Messung einer Verdrehung zumindest des Empfängers zu einer Bezugsachse auf. Durch die Bestimmung des Winkelfehlers vom Sender und/oder Empfänger bei einer Verdrehung derselben kann der Fehler bestimmt werden und in die Berechnung der Verformung, insbesondere Durchbiegung des Rotorblatts eingehen und so kompensiert werden. Unter einer Verdrehung wird eine Winkelabweichung des Senders und/oder Empfängers gegenüber der Position im unbelasteten Zustand bzw. gegenüber einer Bezugsachse des Rotorblatts verstanden. Unter einer Bezugsachse wird jede Achse verstanden, die als Referenzachse eines Koordinatensystems dienen kann, über das die Verformung des Rotorblatts berechnet werden kann.

Bei einer Ausführungsform der Erfindung wird die Erfassung der Verdrehung vom Sender und/oder Empfänger mittels eines weiteren Reflektors und/oder Senders vorgenommen, welcher gegenüber dem Sender und/oder Empfänger im geringeren Abstand als der erstgenannte Reflektor angebracht ist. Es ist also ein Referenzmarke vorgesehen, welcher vorzugsweise in der Nähe oder an der Nabe des Rotors angeordnet ist. Der weitere Reflektor, im Folgenden auch als Referenzreflektor bezeichnet, befindet sich damit vorzugsweise in einem Bereich, welcher allenfalls eine geringe Verformung bei Belastung erfährt. Weiter ist auch denkbar, das Verhältnis einer Verformung des Rotorblatts im Bereich des Referenzreflektors zu der Verformung des Reflektors zu bestimmen und in die Messung einfließen zu lassen.

Vorzugsweise befindet sich der Referenzreflektor oder Referenzsender aber im nabennahen Bereich, so dass die Verformung des Bereiches, in dem der Referenzreflektor angeordnet ist, vernachlässigt werden kann.

Der weitere Sender oder Reflektor ist vorzugsweise an einer Stelle des Rotors angeordnet, welche gegenüber der Stelle, an der der andere Sender oder Reflektor angebracht ist, im belasteten Zustand eine kleinere Positionsabweichung, mithin eine kleinere Durchbiegung erfährt.

Die Bestimmung der Verdrehung des Senders und/oder Empfängers über den zweiten Reflektor erfolgt vorzugsweise ebenfalls optisch, insbesondere ebenfalls mittels einer Leuchtdiode und/oder mittels eines Flächensensors, wie beispielsweise eines CCD- oder CMOS-Empfängers.

Die Einrichtung zur Messung der Verformung des Rotorblatts kann besonders einfach ausgebildet werden, indem der Sensor einen zweiten Messkanal umfasst, der auf den weiteren Reflektor ausgerichtet ist. Es ist denkbar, als Sender eine weitere Lichtquelle zu verwenden oder die Lichtquelle derart auszubilden und anzuordnen, dass diese in zwei Richtungen abstrahlt.

Sender und/oder Empfänger sind bei einer Ausführungsform der Erfindung an einem zwischen Nabe und Rotorblatt liegenden Schott beziehungsweise einer Plattform angeordnet. In diesem Bereich lässt sich die Sender-/Empfängereinheit besonders einfach anbringen.

Der Sender ist vorzugsweise als Lichtquelle, insbesondere als Leuchtdiode bzw. eine Mehrzahl von Leuchtdioden ausgebildet. Diese ist energiesparend und das monochromatische Licht lässt sich besser vom Umgebungslicht unterscheiden, so dass die Gefahr, dass der Empfänger durch Umgebungslicht beeinträchtigt wird, reduziert wird.

Der Reflektor sowie der Referenzreflektor sind vorzugsweise als Array von Tripel-Spiegeln oder Tripel-Prismen, bzw. geeigneten Retroreflektoren ausgebildet.

Bei einer Weiterbildung der Erfindung weisen Sender und/oder Empfänger Mittel zur drahtlosen Übertragung von Messsignalen auf. So ist es nicht erforderlich, im Bereich der Nabe Kabeldurchführungen vorzusehen.

Bei einer Weiterbildung der Erfindung weist Sender und/oder Empfänger Mittel zur Stromerzeugung auf, um sich selbst mit Energie zu versorgen. Derartige, nach dem Prinzip des "Energy Harvesting" arbeitende Systeme sind bekannt.

Es handelt sich dabei beispielsweise um Piezo-elektrisch funktionierende Systeme, welche durch die Drehung des Rotors Energie gewinnen, um diese in Strom umwandeln zu können. Aber auch andere Einrichtungen zur Erzeugung von Energie, wie beispielsweise Photozellen, sind denkbar.

Eine weitere Weiterbildung besteht darin, dass die Reflektoren nicht als Retroreflektoren ausgebildet sind, sondern selbst eine Lichtquelle und Mittel zur Stromerzeugung aufweisen. Dies erhöht die Robustheit gegenüber Verschmutzung, Beschlag und Vereisung. Ein solcher aktiver Reflektor kann entweder durch ein Signal, beispielsweise einem in Richtung des Reflektors gesendeten Lichtpulses, synchron zur Belichtung des Sensors getriggert werden, oder der Sensor synchronisiert die Belichtung des Detektors mit der Pulsfrequenz des aktiven Reflektors.

So braucht die Sender-/Empfängereinheit, oder auch der aktive Reflektor, nicht mit Batterien bestückt zu werden und es sind ferner keine Kabeldurchführungen zur Stromversorgung erforderlich.

Die Erfindung betrifft des Weiteren ein Verfahren zur Messung der Verformung eines Rotorblatts, insbesondere mittels einer vorstehend beschriebenen Einrichtung.

Mittels eines Senders wird ein Signal, insbesondere ein Lichtstrahl über einen Reflektor oder direkt auf einen beabstandeten Empfänger gesendet. Anhand einer Positionsänderung des empfangenen Signals wird die Verformung des Rotorblatts, insbesondere die Verbiegung des Rotorblatts, bestimmt.

Die Bestimmung erfolgt insbesondere optisch mittels eines Flächensensors.

Gemäß der Erfindung wird eine durch eine Verformung des Rotorblatts verursachte Verdrehung des Senders und/oder Empfängers gemessen und diese Verdrehung bei der Berechnung der Verformung des Rotorblatts berücksichtigt.

Die Verdrehung wird vorzugsweise anhand eines weiteren Reflektors, eines Referenzreflektors, bestimmt, welcher vorzugsweise an, beziehungsweise in der Nähe der Nabe des Rotorblatts angeordnet ist.

### Beschreibung der Zeichnungen

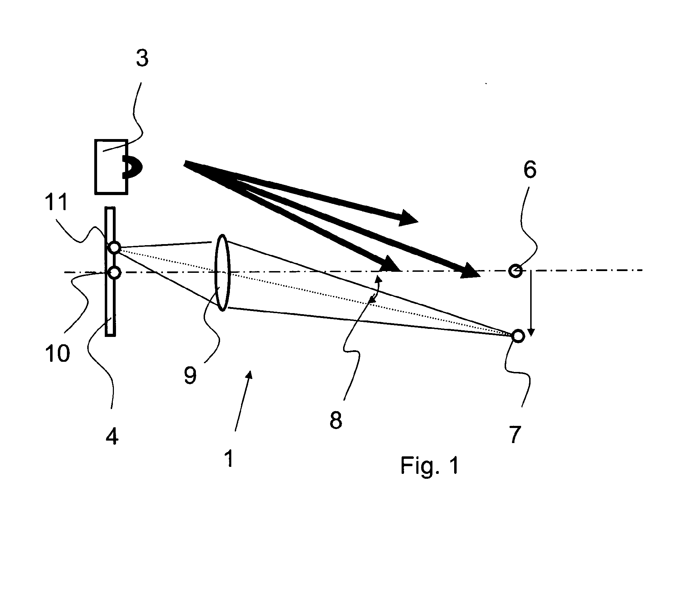

Die Erfindung soll im Folgenden anhand eines schematisch dargestellten Ausführungsbeispiels Bezug nehmend auf die Zeichnungen Fig. 1 bis Fig. 7 näher erläutert werden.

Bezug nehmend auf Fig. 1 soll schematische ein Messprinzip zur Bestimmung der Vorformung eines Rotorblatts erläutert werden.

Schematisch dargestellt ist eine Einrichtung zur Messung der Verformung eines Rotorblatts 1.

Die Einrichtung zur Messung der Verformung eines Rotorblatts 1 umfasst einen Sender 3, hier in Form einer Leuchtdiode, sowie einen Empfänger 4, hier in Form eines CCD- oder CMOS- Empfängers.

Über den Sender 3 wird Licht abgestrahlt, welches von einem (oder mehreren) am Rotorblatt angeordneten Retroreflektor reflektiert wird.

Hier dargestellt ist im unbelasteten Zustand eine Reflektorposition 1, welche mit Bezugszeichen 6 bezeichnet ist. In dieser Position liegt der Retroreflektor genau mittig gegenüber dem Empfänger 4. Die Position des Lichtpunktes im unbelasteten Zustand ist mit Bezugszeichen 10 gekennzeichnet.

Im belasteten Zustand, für den der Strahlengang eingezeichnet ist, verschiebt sich die Position des Retroreflektor auf die mit Bezugszeichen 7 bezeichnete Position. In der Folge wandert der über eine Linse 9 auf den Empfänger projizierte Lichtpunkt auf die mit Bezugszeichen 11 bezeichnete Position. Der Reflektionswinkel 8 kann so bestimmt werden und anhand dieses Winkels und des bekannten Abstands zum Retroreflektor direkt die Verformung des Rotorblatts an der Stelle des Retroreflektors oder der Retroreflektoren berechnet werden.

Bei einer alternativen Ausführungsform der Erfindung (nicht dargestellt) sitzt der Sender an der Stelle des Reflektors. Es ist ersichtlich, dass sich so das in Fig. 1 dargestellte Grundprinzip nicht ändert.

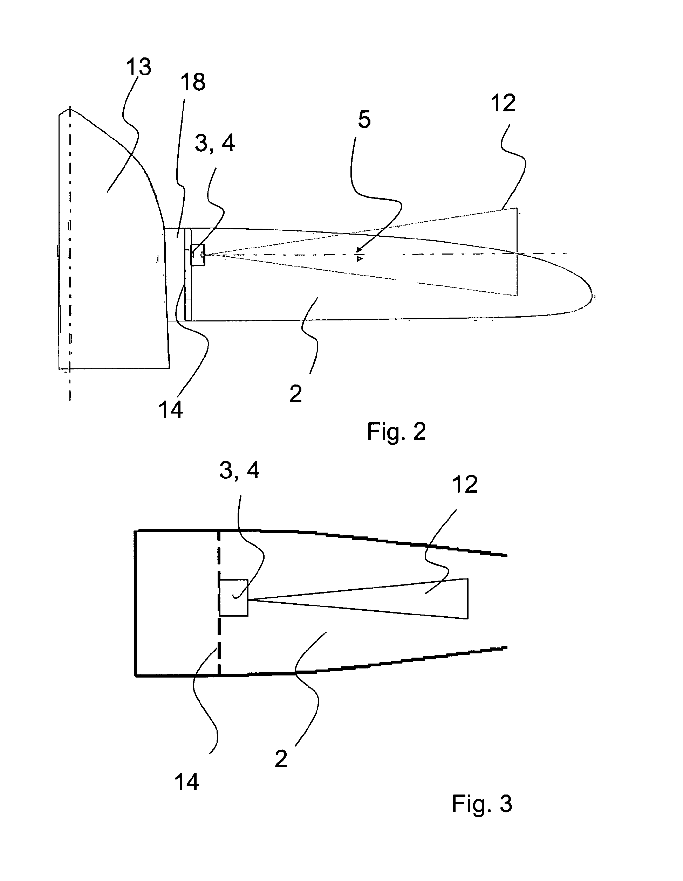

In Fig. 2 ist schematisch ein Rotorblatt 2 dargestellt, welches mit einer Sender-/Empfängereinheit 3, 4 versehen ist.

Das Rotorblatt 2 ist mittels eines Flansches 18 in der Nabe 13 eines Windrads befestigt. Die Sender-/Empfängereinheit 3, 4 ist beispielsweise an einem Schott (Plattform) 14 angebracht, welches an den Flansch 18 angrenzt. Es ist jedoch jede andere Position möglich. Voraussetzung ist ein freies Sichtfeld zu den Retroreflektoren. Insbesondere wäre auch eine Montage direkt in der Nabe bzw. dem Flansch denkbar.

Von der Sender-/Empfängereinheit 3, 4 beabstandet befindet sich ein Retroreflektor 5, hier schematisch in Form eines Tripel-Spiegels, der das vom Sender 3 abgestrahlte Licht auf die Sender-/Empfängereinheit 3, 4 zurück reflektiert. Der von dem Sender in Form einer Leuchtdiode ausgehende Lichtkegel ist größer oder gleich des vom Empfänger vorgegebenen Messbereichs. Der hier schematisch eingezeichnete Messbereich ist so groß, so dass der Reflektor 5 nicht aus dem Messbereich wandern kann.

Fig. 3 zeigt, schematisch dargestellt, das Prinzip der an dem Schott (Plattform) 14 angebrachten Sender-/Empfängereinheit 3, 4, welche einen Lichtkegel, der den Messbereich 12 definiert, auf das Rotorblatt 2 abstrahlt.

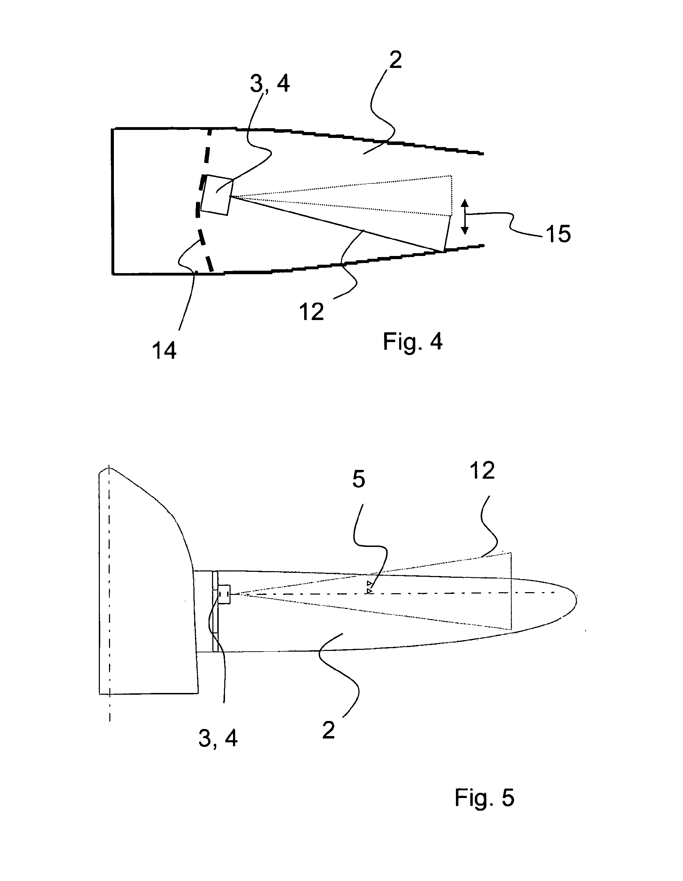

Fig. 4 zeigt, ausgehend von Fig. 3, als Prinzipskizze die Verformung des Schotts (Plattform) 14 bei Belastung, welche zu einer Verdrehung, also zu einer Winkelabweichung der Sender-/Empfängereinheit 3, 4 gegenüber der Position im unbelasteten Zustand führt. Zu sehen ist, dass der Messbereich 12 nicht mehr genau auf der Achse des Rotorblatts 2 liegt, sondern gewandert ist. Die Richtungsänderung ist mit dem Pfeil 15 dargestellt. Es versteht sich, dass die hier dargestellten Verformungen stark übertrieben dargestellt sind und es sich außerdem hierbei um ein dreidimensionales Problem handelt, d.h. die Verformung kann über einen Flächensensor nicht nur in einer Richtung bestimmt werden.

Fig. 5 zeigt analog zur Fig. 2, das Rotorblatt 2 im belasteten Zustand. Aufgrund der Verdrehung der Sender-/Empfängereinheit 3, 4 ist der Messbereich 12 in dieser Ansicht leicht nach unten gewandert. Der Reflektor 5 befindet sich immer noch im Messbereich 12, allerdings kommt es durch die Verdrehung der Sender-/Empfängereinheit 3, 4 und dem damit verbundenen Winkelfehler zu einem Messfehler.

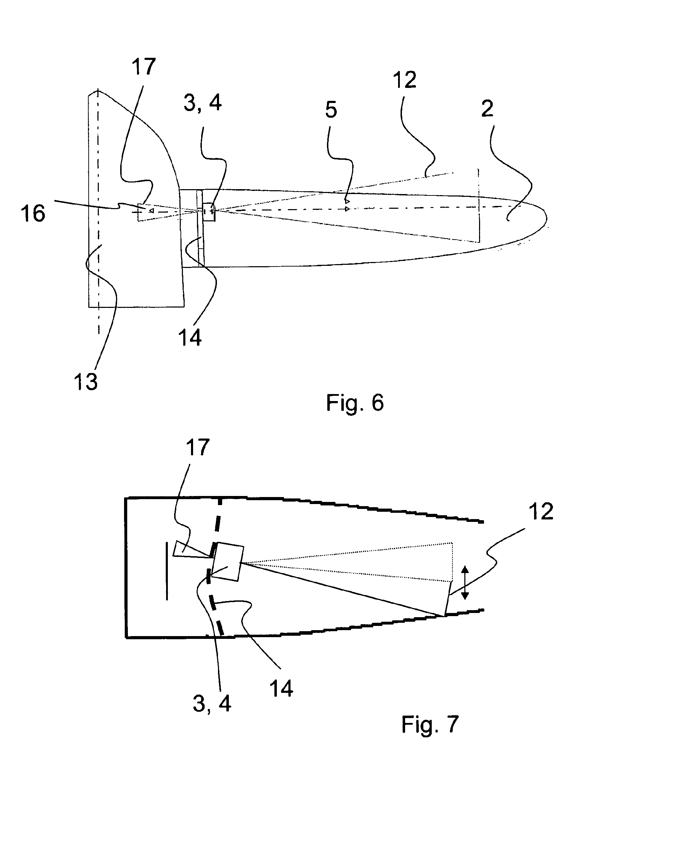

Fig. 6 zeigt, schematisch dargestellt, wie gemäß einer Ausführungsform der Erfindung der Messfehler durch eine Verdrehung der Sender-/Empfängereinheit 3, 4 kompensiert werden kann. Hierzu ist auf der Nabe 13 des Rotors ein weiterer Reflektor 16 als Referenzreflektor angeordnet.

Über einen zweiten Kanal der am Schott (Plattform) 14 angeordneten Sender-/Empfängereinheit wird ein Messbereich mit zugehöriger Beleuchtung auf den Referenzreflektor 16 gerichtet. Der Messbereich ist durch Bezugszeichen 17 gekennzeichnet. Ansonsten entspricht die Messung der Verformung den in Fig. 4 und Fig. 5 dargestellten Ausführungsformen. Es versteht sich, dass statt des Referenzreflektors 16 auch ein Referenzsender wie beispielsweise eine LED verwendet werden kann (nicht dargestellt).

Da die Verdrehung der Sender-/Empfängereinheit 3, 4 optisch durch den vom Reflektor 16 zurückreflektierten Lichtpunkt bestimmt werden kann, kann diese bei der Bestimmung der Verformung des Rotorblatts 2 berücksichtigt werden und wirkt sich nicht als systematischer Messfehler aus. Eine Korrektur ist nur möglich, wenn nicht gleichzeitig eine laterale Verschiebung überlagert ist.

Fig. 7 zeigt, schematisch dargestellt, das Messprinzip. Aufgrund einer Verdrehung des Schotts (Plattform) 14 ist auch die Sender-/Empfängereinheit 3, 4 verdreht, wodurch sich der Messbereich 12 verschiebt.

Aufgrund des zweiten Messkanals mit dem Messbereich 17 kann die Verdrehung der Sender-/Empfängereinheit 3, 4 bestimmt werden und so in die Berechnung der Verformung des Rotorblatts eingehen. Es versteht sich, dass auch andere Systeme verwendet werden können, um die Verdrehung der Sender-/Empfängereinheit zu bestimmen. Grundsätzlich kann jede Technik verwendet werden, mit der zwei Winkel zu einer Referenzebene gemessen werden können.

Die Erfindung ermöglicht auf sehr einfache Weise eine Verbesserung der Genauigkeit eines Systems zur Berechnung der Verformung eines Rotorblatts.

### Bezugszeichenliste:

- 1: Einrichtung zur Messung der Verformung eines Rotorblatts
- 2: Rotorblatt
- 3: Sender
- 4: Empfänger des Messkanals
- 5: Retroreflektor (=Messmarke)
- 6: Reflektorposition 1
- 7: Reflektorposition 2
- 8: Reflektionswinkel
- 9: Linse des Messkanals
- 10: Spotposition auf Empfänger 1
- 11: Spotposition auf Empfänger 2
- 12: Messbereich
- 13: Nabe
- 14: Schott (bzw. Plattform)
- 15: Pfeil (= Winkelverdrehung)
- 16: weiterer Reflektor (= Referenzreflektor, Referenzmarke)
- 17: Messbereich Referenzpfad
- 18: Flansch

## Patentansprüche

1. Einrichtung zur Messung der Verformung eines Rotorblatts bei Belastung, insbesondere des Rotorblatts einer Windkraftanlage, umfassend zumindest einen am Rotorblatt angeordneten Empfänger sowie zumindest einen, von Empfänger beabstandet am Rotorblatt angeordneten Sender und/oder Reflektor, **dadurch gekennzeichnet, dass** die Einrichtung Mittel zur Messung einer Verdrehung des Senders und/oder Empfängers zu einer Rotorblatt-Bezugsachse aufweist.

2. Einrichtung zur Messung der Verformung eines Rotorblatts nach dem vorstehenden Anspruch, **dadurch gekennzeichnet, dass** die Mittel zur Messung einer Verdrehung einen weiteren Sender und/oder Reflektor umfassen, welcher gegenüber dem Empfänger in geringerem Abstand als der Sender und/oder Reflektor angebracht ist.

3. Einrichtung zur Messung der Verformung eines Rotorblatts nach dem vorstehenden Anspruch, **dadurch gekennzeichnet, dass** der weitere Sender und/oder Reflektor an der Nabe des Rotors angeordnet ist.

4. Einrichtung zur Messung der Verformung eines Rotorblatts nach einem der beiden vorstehenden Ansprüche, **dadurch gekennzeichnet, dass** der Empfänger einen zweiten Messkanal umfasst, der auf den weiteren Sender und/oder Reflektor ausgerichtet ist.

5. Einrichtung zur Messung der Verformung eines Rotorblatts nach einem der vorstehenden drei Ansprüche, **dadurch gekennzeichnet, dass** der weitere Reflektor an einer Stelle des Rotorblatts angeordnet ist, welche gegenüber der Stelle an der andere Reflektor angebracht ist, im belasteten Zustand eine kleinere und/oder eine proportionale Positionsabweichung aufweist.

6. Einrichtung zur Messung der Verformung eines Rotorblatts nach einem der vorstehenden Ansprüche, **dadurch gekennzeichnet, dass** der Empfänger zwischen Sendern und/oder Reflektoren angeordnet ist.

7. Einrichtung zur Messung der Verformung eines Rotorblatts nach einem der vorstehenden Ansprüche, **dadurch gekennzeichnet, dass** der Sender als Lichtquelle, insbesondere als Laserdiode oder Leuchtdiode ausgebildet ist.

8. Einrichtung zur Messung der Verformung eines Rotorblatts nach einem der vorstehenden Ansprüche, **dadurch gekennzeichnet, dass** der Reflektor als Tripelspiegel oder Tripelprisma, Array von Tripelspiegel, Array von Tripelprismen, oder einem anderen geeigneten Retroreflektor ausgebildet istund/oder dass der Empfänger als optischer Flächensensor, insbesondere als CCD- oder CMOS-Sensor ausgebildet ist.

9. Einrichtung zur Messung der Verformung eines Rotorblatts nach einem der vorstehenden Ansprüche, **dadurch gekennzeichnet, dass** Sender und/oder Empfänger Mittel zur drahtlosen Übertragung von Messsignalen aufweisen.

10. Einrichtung zur Messung der Verformung eines Rotorblatts nach einem der vorstehenden Ansprüche, **dadurch gekennzeichnet, dass** Sender und/oder Empfänger Mittel zur Stromerzeugung aufweisen, um mit Energie versorgt zu werden.

11. Einrichtung zur Messung der Verformung eines Rotorblatts nach einem der vorstehenden Ansprüche, **dadurch gekennzeichnet, dass** zumindest ein Sender Mittel zur Stromerzeugung aufweist, um mit Energie versorgt zu werden.

12. Einrichtung zur Messung der Verformung eines Rotorblatts nach einem der vorstehenden Ansprüche, **dadurch gekennzeichnet, dass** der Referenzkollimator Mittel zur Stromerzeugung aufweist, um mit Energie versorgt zu werden und/oder dass die Reflektoren zusätzlich oder ausschließlich Lichtquellen enthalten.

13. Verfahren zur Messung der Verformung eines Rotorblatts, insbesondere mittels einer Einrichtung zur Messung der Verformung nach einem der vorstehenden Ansprüche, umfassend die Schritte:
- Senden eines Signals direkt von einem beabstandeten Sender oder über einen Reflektor auf einen Empfänger
- Bestimmen einer Verformung, insbesondere Bestimmen einer Verbiegung des Rotorblatts anhand einer Positionsänderung des empfangenen Signals, **dadurch gekennzeichnet, dass** eine durch eine Verformung des Rotorblatts verursachte Verdrehung eines Senders zum Senden des Signals und/oder eines Empfängers zum Empfangen des Signals gemessen wird und diese Verdrehung bei der Berechnung der Verformung des Rotorblatts berücksichtigt wird.

14. Verfahren zur Messung der Verformung eines Rotorblatts nach dem vorstehenden Anspruch, **dadurch gekennzeichnet, dass** die Verdrehung des Senders und/oder Empfängers über einen weiteren Sender und/oder Reflektor gemessen wird.

15. Verfahren zur Messung der Verformung eines Rotorblatts nach einem der vorstehenden Ansprüche, **dadurch gekennzeichnet, dass** die Verdrehung des Senders und/oder Empfängers über einen weiteren Sender und/oder Reflektor gemessen wird, welcher an der Nabe des Rotorblatts angeordnet ist.
